# EUROPÄISCHE PATENTSCHRIFT

(11) **EP 2 746 079 B1**
(45) Veröffentlichungstag und Bekanntmachung des Hinweises auf die Patenterteilung: **20.02.2019**
(21) Anmeldenummer: 12197856.3
(22) Anmeldetag: 18.12.2012
(51) Int. Cl.: B60J 7/06

(54) **Planenaufbau für ein Nutzfahrzeug und Nutzfahrzeug mit einem solchen Aufbau**
Canvas cover for commercial vehicle and commercial vehicle with such a canvas cover
Bâche pour un véhicule utilitaire et véhicule utilitaire muni d' une telle bache

(43) Veröffentlichungstag der Anmeldung: 25.06.2014
(73) Patentinhaber: Schmitz Cargobull AG, 48341 Altenberge (DE)
(72) Erfinder: Runde, Felix, 48268 Greven (DE); von der Stein, Lucas, 48167 Münster (DE)
(74) Vertreter: Cohausz & Florack

(56) Entgegenhaltungen:
- EP-A2- 0 890 465
- EP-A2- 1 122 108
- EP-A2- 1 502 789
- EP-A2- 2 540 598

## Beschreibung

Die Erfindung betrifft einen Planenaufbau für ein Nutzfahrzeug, der einen Innenraum gegenüber der Umgebung abgrenzt, wobei an dem Planenaufbau mindestens ein Schlitz vorhanden ist, der von der Umgebung zum Innenraum führt und von zwei aneinander liegenden Bauteilen begrenzt ist. Planenaufbauten dieser Art sind beispielsweise aus der EP 2 520 451 A1 und der EP 1 122 108 A2 bekannt.

Bei Nutzfahrzeugen der hier in Rede stehenden Art handelt es sich typischerweise um einen Auflieger für einen Sattelzug, um einen Lastkraftwagen oder um einen konventionellen Anhänger, bei denen jeweils der Laderaum von dem Planenaufbau umgeben und beim Transport das auf der Ladefläche des Nutzfahrzeugs stehende Transportgut gegenüber der Umgebung abgeschirmt wird. Insbesondere dann, wenn es sich bei dem Nutzfahrzeug um einen Auflieger handelt, werden solche Fahrzeuge in der Fachsprache auch als "Curtain-Sider" bezeichnet.

In der Regel besitzt der Planenaufbau solcher Nutzfahrzeuge eine quaderförmige Grundform, bei der das Dach und die Längsseiten durch flexible, längs der jeweiligen Längsseite des Nutzfahrzeugs verschiebbare Dach- und Seitenplanen gebildet ist, während ihre in Fahrtrichtung vordere Stirn- und ihre in Fahrtrichtung rückwärtige Rückseite aus einem festen Material gefertigt sind. Bei geschlossenem Aufbau schließen die Seitenplanen den Planenaufbau an dessen Längsseiten dicht ab, während bei in eine geöffnete Stellung geschobenen Seitenplanen die Ladefläche des Nutzfahrzeugs von der jeweiligen Längsseite her beladen werden kann.

Die aus einer für den Fahrbetrieb geschlossenen Stellung in eine zum Beladen des vom Planenaufbau umgebenen Laderaums geöffnete Stellung verschiebbaren Seitenplanen sind üblicherweise an so genannten "Schieberungen" gehalten. Diese können längs der jeweiligen Längsseite verschoben werden, um die jeweilige Seitenplane aus der Schließstellung, in der sie die ihr jeweils zugeordnete Längsseite abdeckt, in die Öffnungsstellung zu bringen, in der ein von dem Planenaufbau umgebener Laderaum des Nutzfahrzeugs zugänglich ist. Ebenso kann auch die Dachplane des Planenaufbaus an so genannten "Dachschieblingen" geführt sein, die die Breite des Planenaufbaus überspannen und zum Öffnen und Schließen des Dachs unter Mitnahme der Dachplane in Längsrichtung des Aufbaus verschoben werden können.

Sowohl die Schieberungen als auch die Dachschieblinge sind üblicherweise in einem sich über die Länge des Planenaufbaus erstreckenden Längsprofil geführt, das Bestandteil der die Grundstabilität des Planenaufbaus gewährleistenden Tragkonstruktion ist. Die Tragkonstruktion besteht üblicherweise aus in Bezug auf die Ladefläche senkrecht ausgerichteten Stützrungen und den parallel zu der Ladefläche ausgerichteten, von den Stützrungen getragenen Längsprofilen, an denen die Führungen für die verschiebbaren Seitenplanen vorgesehen sind. Selbstverständlich kann bei einer geeigneten Tragkonstruktion an Stelle einer festen Stirn- oder Rückwand ebenfalls eine Seitenplane vorgesehen sein, um den Planenaufbau auch dort so auszubilden, dass er durch Verschieben der jeweiligen Seitenplane leicht geöffnet und wieder geschlossen werden kann.

In der geschlossenen Stellung liegen die jeweiligen Planen flach an den ihnen zugeordneten Anlageflächen des jeweiligen Bauteils an, bei dem es sich beispielsweise um ein Rahmenprofil, eine feste Stirn- oder Rückwand der Tragkonstruktion des Planenaufbaus, eine möglicherweise vorhandene Bordwand oder desgleichen handeln kann. Wenn zwei Planen aufeinander liegen, bildet ebenso die in Richtung des vom Planenaufbau umgebenen Laderaums unten liegende Plane das Bauteil, dessen zur Umgebung hin gerichtete Außenfläche die Anlagefläche für die darauf liegende zweite Plane darstellt.

Eine vergleichbare Situation besteht bei bestimmten Varianten von Planenaufbauten, bei dem beispielsweise der stirnseitige Bereich des Dachs durch eine feste Kunststoff- oder Leichtmetallbauhaube gebildet ist, die mit einem stirnseitigen Wandabschnitt auf der Außenseite der ebenfalls aus festem Material bestehenden Stirnwand des Planenaufbaus anliegt.

Unabhängig davon, wie die jeweils aneinander liegenden Bauteileausgebildet sind, liegt aufgrund der erforderlichen Beweglichkeit oder für eine einfache Demontierbarkeit das jeweilige Bauteil zumindest streckenweise lose an der zugeordneten Anlagefläche an. Dementsprechend ist zwischen den jeweils aneinander anliegenden Bauteilen unvermeidbar ein Schlitz vorhanden. Dieser Schlitz eröffnet zumindest die theoretische Möglichkeit eines von außen erfolgenden Zugangs zum Laderaum.

Bei Nutzfahrzeugen, die im Import-, Export- und Transitverkehr eingesetzt werden, müssen Planenaufbauten den von den jeweiligen Zollbehörden an die Zollsicherheit gestellten Anforderungen genügen. So sind für den internationalen Warentransport unter Zollverschluss nur solche Planenaufbauten zugelassen, bei denen sichergestellt ist, dass dem jeweils zollamtlich verschlossenen Teil des Aufbaus keine Waren entnommen oder in ihn hineingebracht werden können, ohne sichtbare Spuren des Aufbrechens zu hinterlassen oder den Zollverschluss zu verletzten. In der Praxis soll diese Anforderung durch Verwendung einer so genannten "Zollschnur" erfüllt werden, die um die Seiten- und Dachplanen des Planenaufbaus gespannt wird. In ihrer gespannten Stellung wird die Zollschnur mit einer Plombe versehen, die gebrochen werden muss, um die Zollschnur zum Öffnen der jeweiligen Plane zu lösen. Als Führung für die Zollschnur werden dabei üblicherweise ösenartige, an der Tragkonstruktion des Planenaufbaus befestigte Führungselemente vorgesehen, die durch zugeordnete Öffnungen der jeweiligen Plane greifen. Durch die durch die Plane greifenden Führungselemente verläuft die Zollschnur, so dass die Plane nicht mehr geöffnet werden kann, solange sich die Zollschnur am vorgesehenen Platz befindet.

Die Zollschnur stellt in der Regel einen ordnungsgemäßen Verschluss des Planenaufbaus sicher, wenn sie selbst ordnungsgemäß gespannt und am Planenaufbau angebracht ist und wenn gleichzeitig auch die durch die Zollschnur jeweils gesicherte Seitenplane in einem ordnungsgemäß gespannten Zustand gehalten ist. Dabei sollten die Zugspannungen, unter der sie im Gebrauch gehalten werden, so groß sein, dass die Seitenplane in enger Anlage an der jeweils zugeordneten Anlagefläche der Tragkonstruktion des Planenaufbaus gehalten ist und ein Durchgreifen durch den unvermeidbar zwischen Anlagefläche und Plane vorhandenen Schlitz aufgrund der dort wirkenden Kräfte nicht möglich ist. Praktische Erfahrungen zeigen jedoch, dass in Folge von falscher Bedienung, ungenauer Ausrichtung oder Ermüdung der Seitenplane unter bestimmten Bedingungen nicht ausgeschlossen werden kann, dass ein gezielt durchgeführter Versuch, durch den jeweiligen Schlitz mit der Hand in den Laderaum des Nutzfahrzeugs zu gelangen oder einen Gegenstand in den Laderaum zu schieben bzw. aus ihm zu entnehmen, sicher verhindert wird.

Ein weiterer Planenaufbau ist aus der EP 1 502 789 A2 bekannt. Bei diesem Planenaufbau ist die Plane an einem sich über die Länge des Aufbaus erstreckenden Führungsprofil geführt. Dazu hängt die Plane an Rollwagen, die verschiebbar in dem Führungsprofil gelagert sind. Um zu verhindern, dass Feuchtigkeit in das Führungsprofil gelangt, ist an der der Umgebung zugeordneten Außenseite des Führungsprofils eine Dichtlippe gehalten, die flach an einem ebenfalls der Umgebung des Planenaufbaus zugeordneten oberen Randbereich der Außenseite der Plane anliegt. Die Dichtlippe deckt dabei einen schlitzartigen Abstand zwischen dem Führungsprofil und der Oberkannte der Plane ab. Jedoch kann auch die in der Regel aus einem elastischen Gummimaterial bestehende Dichtlippe nicht verhindern, dass Unbefugte sie von der Plane abheben, um durch den zwischen Planenoberkante und Führungsprofil vorhandenen Schlitzabstand zu greifen.

Vor dem Hintergrund des voranstehend erläuterten Standes der Technik bestand die Aufgabe der Erfindung darin, mit einfachen Mitteln einen zollsicher verschließbaren Planenaufbau und ein entsprechend gestaltetes Nutzfahrzeug zu schaffen, bei denen die Gefahr, dass eine von außen nicht sichtbare Manipulation des Ladeguts vorgenommen wird, weiter reduziert ist.

Zur Lösung dieser Aufgabe schlägt die Erfindung den in Anspruch 1 angegebenen Planenaufbau und ein mit einem solchen erfindungsgemäßen Aufbau versehenes Nutzfahrzeug vor.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Planenaufbau für ein Nutzfahrzeug grenzt in Übereinstimmung mit dem eingangs erläuterten Stand der Technik einen Innenraum gegenüber der Umgebung ab. Bei diesem Innenraum handelt es sich typischerweise um einen Laderaum, der im Gebrauch das von dem Nutzfahrzeug jeweils zu transportierende Gut aufnimmt. Dabei ist am Planenaufbau mindestens ein Schlitz vorhanden, der von der Umgebung zum Innenraum führt und von zwei Bauteilen begrenzt ist, von denen das erste Bauteil an einer Anlagefläche des zweiten Bauteils liegt.

In den meisten Anwendungsfällen wird es sich bei dem einen den Schlitz begrenzenden Bauteil um eine Plane handeln, die bei geschlossenem Planenaufbau eine der Seiten oder das Dach des Planenaufbaus bildet. Das andere Bauteil, an dem das in diesem Fall als Plane ausgebildete erste Bauteil bei Gebrauch anliegt, kann dabei Bestandteil einer Tragkonstruktion sein, die die Plane trägt. Es kann sich in diesem Fall bei dem zweiten Bauteil jedoch auch um ein von einer solchen Tragkonstruktion unabhängiges Element, wie beispielsweise eine Bordwand handeln, das zusätzlich zur Begrenzung oder Absicherung des von dem Planenaufbau umgrenzten Laderaums dient. Ebenso kann das zweite Bauteil ebenfalls eine Plane sein, an der das erste Bauteil überlappend anliegt. Eine solche Situation ist beispielsweise dann gegeben, wenn eine Dachplane als das eine Bauteil und eine Seitenplane als das andere Bauteil aneinander anliegend einen gegen Durchgriff zu schützenden Schlitz begrenzen.

Bei einer anderen Ausgestaltung der Erfindung handelt es sich bei dem ersten Bauteil um ein formsteifes Bauelement, das bei geschlossenem Planenaufbau als Teil des Dachs oder einer Seitenwand mit einem Wandabschnitt an dem zweiten Bauteil anliegt. Ein solches Bauteil ist beispielsweise eine aus formsteifem Material, zum Beispiel Leichtmetallblech oder Kunststoff, geformte Haube, die den stirn- oder rückseitigen Abschluss des Dachs des jeweiligen Planenaufbaus bildet. Ebenso kommen bei bestimmten Planenaufbautypen aus solchem formsteifen Material geformte Bauteile als Abschlusselemente zum Einsatz, mit denen die Seitenwände an die Stirn- oder Rückwand des Planenaufbaus angeschlossen sind. Bei dem zweiten Bauteil handelt es sich dementsprechend wiederum jeweils um ein Dach, eine Seitenwand, eine Bordwand, eine Ladebordwand, eine Stirnwand oder eine Rückwand des Planenaufbaus, wobei das Dach oder jede dieser Wände entweder durch eine Plane gebildet oder als formsteifes Bauelement ausgebildet sein können.

Erfindungsgemäß ist nun im Bereich des zwischen dem ersten Bauteil und der zugeordneten Anlagefläche des jeweils anderen Bauteils ausgebildeten Schlitzes mindestens eine Eingriffsbarriere vorgesehen, die ein Durchgreifen durch den Schlitz zum Innenraum verhindert, wobei die Eingriffsbarriere an einem der beiden Bauteile befestigt ist und wobei die Eingriffsbarriere im an dem jeweils anderen Bauteil anliegenden Zustand mit diesem Bauteil lose zusammenwirkt.

Bei einem erfindungsgemäßen Planenaufbau ist somit im Bereich des unvermeidbar vorhandenen Schlitzes ein Element, die Eingriffsbarriere, angeordnet, das ein- oder Durchgreifen durch den Schlitz in den vom Planenaufbau umgebenen Raum verhindert. Das betreffende Element ist dabei an einem der beiden im Gebrauch aneinander anliegenden Bauteile befestigt und wirkt mit dem jeweils anderen Bauteil jeweils lose zusammen. "Lose Zusammenwirken" bedeutet in diesem Zusammenhang, dass im Gebrauchszustand keine feste Verbindung zwischen der Eingriffsbarriere und dem Bauteil, gegen das sie jeweils wirkt, besteht, sondern dass sich der Kontakt zwischen der Eingriffsbarriere und dem jeweiligen Bauteil ohne zusätzliche Krafteinwirkung löst, wenn beispielsweise das eine Bauteil aus einer Stellung, bei der der Planenaufbau geschlossenen ist, in eine Position bewegt wird, in der der Planenaufbau zum Beladen des von ihm umgebenen Innenraum geöffnet ist.

Durch die erfindungsgemäß vorgesehene Eingriffsbarriere ist der zwischen den aneinander zumindest abschnittsweise lose anliegenden Bauteilen unvermeidbar vorhandene Schlitz so verengt, dass auch bei unzureichend exakter Ausrichtung mit einer menschlichen Hand nicht durch den Schlitz in den vom Planenaufbau umgrenzten Raum gelangt werden kann.

Letzteres erweist sich insbesondere dann als zweckmäßig, wenn es sich bei dem einen Bauteil um eine Plane handelt, auf deren Außenseite im Gebrauch für den zollsicheren Verschluss eine Zollschnur wirkt. Das Risiko, dass die zollsicher verstaute Ladung nachträglich durch einen über den Schlitz erfolgenden Zugriff manipuliert wird, ist so auf ein Minimum reduziert. Sowohl die dazu erfindungsgemäß vorgesehenen Mittel als auch die Handhabung eines erfindungsgemäß ausgebildeten Aufbaus sind denkbar einfach, da lediglich eine in geeigneter Weise ausgebildete Eingriffsbarriere an geeigneter Stelle von bereits vorhandenen Elementen des Planenaufbaus angebracht werden muss und durch die Eingriffsbarriere die Funktion der betreffenden Elemente nicht oder allenfalls in geringem Maße beeinflusst wird.

Wie oben bereits erwähnt, entstehen bauartbedingt Schlitze, die erforderlichenfalls in der hier beschriebenen erfindungsgemäßen Art und Weise gegen ein Durchgreifen zu schützen sind, an verschiedenen Stellen von Planenaufbauten der zur Gattung der Erfindung gehörenden Art. So kann es beispielsweise angezeigt sein, die Schlitze, die zwischen einer Plane und den Profilen des Tragrahmens, zwischen einer festen Stirn- oder Rückwand der Tragkonstruktion des Planenaufbaus oder einer möglicherweise vorhandenen Ladebordwand oder desgleichen vorhanden sind, in erfindungsgemäßer Weise zu schützen. In gleicher Weise kann es zweckmäßig sein, auch den Schlitz in erfindungsgemäßer Weise zu schützen, der sich zwischen zwei aufeinander liegenden Planen bilden kann. Eine solche Situation kann beispielsweise in einem Bereich entstehen, in dem eine Dachplane und eine Seitenplane in einem Eckbereich des Planenaufbaus überlappend angeordnet sind.

Das erfindungsgemäß vorgesehene lose Zusammenwirken kann beispielsweise dadurch bewerkstelligt werden, dass bei gespannter Plane in Folge der dann in der Plane als dem einen Bauteil in Richtung der Spannung wirkenden Zugkraft eine an der Plane befestigte Eingriffsbarriere gegen die zugeordnete Anlagefläche des jeweiligen Bauteils gedrückt wird, oder dadurch, dass die Plane im gespannten Zustand mit ihrer der Anlagefläche des anderen Bauteils zugeordneten Fläche gegen eine an der betreffenden Anlagefläche befestigte Eingriffsbarriere gedrückt wird.

Im Fall, dass es sich bei dem ersten der aneinander anliegenden Bauteile um eine Plane handelt, erweist es sich unabhängig davon, ob die Eingriffsbarriere an der Plane oder der Anlagefläche des jeweiligen Bauteils befestigt ist, als vorteilhaft, wenn die Plane, wie heute üblich, aus einem flexiblen Material besteht und im gespannten Zustand eine gegen die jeweilige Anlagefläche gerichtete elastische Rückstellkraft auf die Eingriffsbarriere ausübt.

Üblicherweise weisen Planenaufbauten der hier in Rede stehenden Art eine quaderförmige Grundform auf, bei der die jeweilige Hauptebene der durch jeweils mindestens eine Plane gebildeten Seitenwände und der jeweils rechtwinklig dazu stehenden Stirn- und Rückwände im Wesentlichen vertikal ausgerichtet ist, wogegen sich die Hauptebene des Dachs horizontal erstreckt. Ein optimales Zusammenwirken von einer Plane als dem einen der den zu schützenden Schlitz begrenzenden Bauteile und der jeweiligen Eingriffsbarriere ergibt sich dabei dann, wenn die Eingriffsbarriere normal zur Hauptebene ausgerichtet ist, in der sich die jeweilige Plane im gespannten Zustand erstreckt.

Da es sich bei dem einen Bauteil der aneinander anliegenden, den zu schützenden Schlitz begrenzenden Bauteile um eine Plane handelt, wird eine weitere Verbesserung der Schutzwirkung der erfindungsgemäß vorgesehenen Eingriffsbarriere dadurch erzielt, dass die Eingriffsbarriere bei gespannter Plane formschlüssig in eine zugeordnete Aufnahme greift. Sofern die Eingriffsbarriere an der Plane befestigt ist, kann die Aufnahme in die Anlagefläche des jeweiligen Bauteils eingeformt sein. Ist dagegen die Eingriffsbarriere an dem jeweils anderen Bauteil befestigt, so kann die Aufnahme in Form einer Tasche oder einer Durchgangsöffnung der Plane ausgebildet sein, in die die Eingriffsbarriere bei gespannter Plane hineinragt.

Anstelle einer gesondert eingebrachten Aufnahme kann auch eine an dem Planenaufbau bereits vorhandene Aufnahme als Gegenstück genutzt werden, in das die erfindungsgemäß vorgesehene Eingriffsbarriere greift. Dies gilt insbesondere in dem Fall, dass das jeweilige Bauteil des Planenaufbaus, mit dem die Eingriffsbarriere zusammenwirkt, ein Rahmenelement ist und in dieses Rahmenelement-Bauteil eine sich in Längsrichtung des Bauteils erstreckende nutförmige Führungsaufnahme eingeformt ist, in der mindestens ein mit dem einen der Bauteile, beispielsweise der jeweiligen Plane, verbundenes Schiebeglied gelagert ist, mittels dessen dieses Bauteil entlang des anderen Bauteils aus einer geschlossenen Stellung, in der es am dem Bauteil gespannt ist, in eine Stellung verschiebbar ist, in der der Laderaum zum Be- und Entladen geöffnet ist. Die Schiebeglieder können Teil von Schieberungen für die Seitenplanen oder Dachschieblingen für die Dachplane eines Planenaufbaus sein. Dabei ergibt sich ein optimal wirksamer Schutz gegen eine Manipulation der Ladung durch Zugriff, der über den zwischen der jeweiligen Plane und dem mit der Führungsaufnahme versehenen Bauteil unvermeidbar gebildeten Schlitz erfolgt, dann, wenn bei einem Planenaufbau, bei dem zwei oder mehr Schiebeglieder in der Führungsaufnahme geführt und mit Abstand zueinander angeordnet sind, bei geschlossenem Aufbau im Bereich des Abstands zwischen den Schiebegliedern jeweils mindestens eine Eingriffsbarriere angeordnet ist.

Grundsätzlich ist es möglich, die Befestigung der Eingriffsbarriere im Sinne einer kinematischen Umkehr jeweils an dem einen oder dem anderen der aneinander anliegenden Bauteile zu befestigen.

Insbesondere in Fällen, in denen das eine der Bauteile eine Plane ist, die mittels Schiebegliedern, die in einer Führungsaufnahme geführt sind, am jeweils anderen Bauteil gelagert ist, kann es jedoch zur Vermeidung von Funktionseinschränkungen zweckmäßig sein, die Eingriffsbarriere alleine an der Plane zu befestigen. Auf diese Weise wird die jeweilige Barriere beim zum Öffnen des jeweiligen Laderaums durchgeführten Verschieben und der damit einhergehenden Faltenbildung der Plane selbsttätig aus dem Bewegungsbereich der Schiebeglieder bewegt und findet beim Schließen der Plane ebenso selbsttätig wieder zurück zu der Position, in der sie in die Führungsaufnahme des jeweiligen Profilbauteils greift, in dem das Schiebeglied geführt ist. Eine Behinderung der Beweglichkeit der Plane ist auf diese Weise sicher vermieden.

Die Eingriffsbarriere kann grundsätzlich in beliebiger Form ausgebildet sein. Wesentlich für die Formgebung ist dabei an erster Stelle, dass die erfindungsgemäß vorgesehene Verengung der im Bereich des jeweils zu schützenden Schlitzes vorhandenen Freiräume erzielt wird. Im Fall, dass die Eingriffsbarriere an der Anlagefläche des jeweiligen Bauteils angeordnet wird, kann sie dazu beispielsweise block- oder bankförmig ausgebildet sein.

Alternativ oder ergänzend kann es auch möglich sein, die Eingriffsbarriere nach Art von Dornen auszubilden. Dies ist insbesondere dann zweckmäßig, wenn die Eingriffsbarriere bei geschlossenem Aufbau in eine zugeordnete Aufnahme greifen soll. Eine dornenartige Ausformung der Eingriffsbarriere ist auch dann zweckmäßig, wenn mehrere solcher Eingriffsbarrieren beanstandet zueinander an einer das eine der aneinander liegenden, den jeweiligen Schlitz begrenzenden Bauteile bildenden flexiblen Plane befestigt sind, die zum Öffnen des Laderaums unter Faltenbildung in eine Öffnungsstellung und unter Straffung der Plane in eine Schließstellung bewegt werden kann. Durch die diskrete Anordnung der dornenartigen Eingriffsbarrieren wird weder die beim Aufschieben der Plane in die geöffnete Stellung erfolgende Auffaltung noch die beim Schließen erfolgende Straffung der Plane behindert.

Die Abstände, in denen die Eingriffsbarrieren angeordnet sind, können problemlos so eng bemessen werden, dass auch ein Durchgreifen durch die zwischen ihnen verbleibenden Zwischenräume unmöglich ist. Praktische Versuche haben hierzu ergeben, dass die Abstände, in denen die dornenartigen Eingriffsbarrieren angeordnet werden, weniger als 10 cm, insbesondere weniger als 8 cm betragen sollten.

Um die Montage der beispielsweise dornenartigen Eingriffsbarrieren zu erleichtern, können sie an einem flexiblen Band vormontiert werden, das anschließend an der jeweiligen Plane befestigt wird. Im Fall, dass es sich bei dem einen der aneinander anliegenden, den zu schützenden Schlitz begrenzenden Bauteile um eine Plane handelt, können die Eingriffsbarrieren alternativ auch im Bereich des Planensaums angeordnet werden, in dem zwei oder mehr Lagen des Materials der Plane aufeinander liegen und so auf besonders einfache Weise sichergestellt ist, dass die Eingriffsbarrieren auch unter stärkeren Belastungen nicht aus der Plane herausgerissen werden.

Um auch bei einem erfindungsgemäßen Planenaufbau auf einfache Weise eine konventionelle Zollsicherung mittels einer Zollschnur zu ermöglichen, können an dem jeweiligen Bauteil in an sich bekannter Weise Seilführungselemente angebracht sein, die bei gespannter Plane durch ihnen zugeordnete, in die Seitenplane eingebrachte Öffnungen greifen. Durch diese Seilführungselemente kann dann das jeweilige Spannseil (Zollschnur) geführt werden, das im gespannten Zustand gegen die der Umgebung zugewandte Außenseite der Seitenplane wirkt.

Nachfolgend wird die Erfindung anhand von Ausführungsbeispielen näher erläutert. Es zeigen:
- Fig. 1: ein Nutzfahrzeug mit geschlossenem Planenaufbau in einer perspektivischen Ansicht von hinten;
- Fig. 2: das Nutzfahrzeug mit geöffneter Plane in einer der Fig. 1 entsprechenden Ansicht;

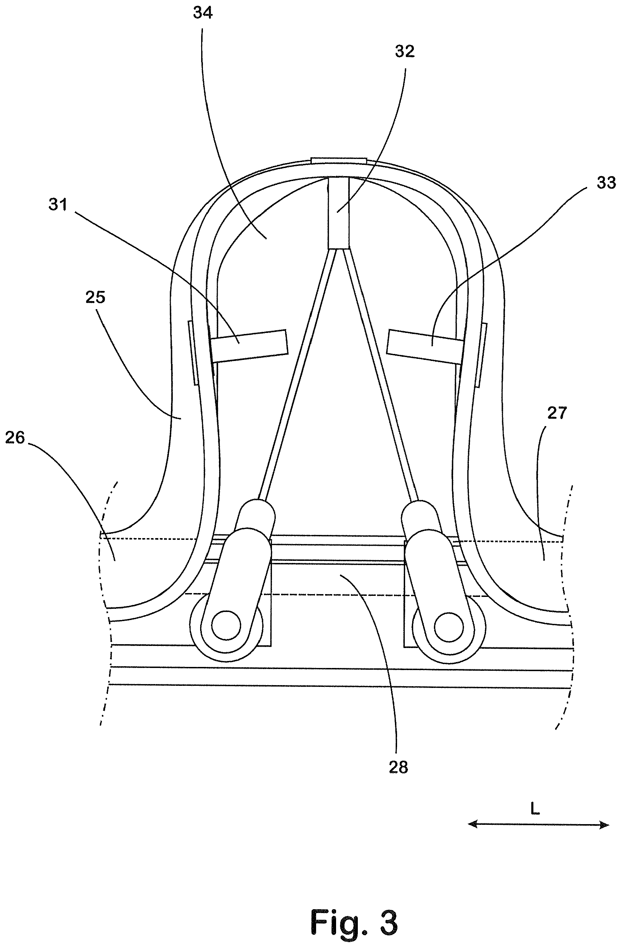

- Fig. 3: einen Ausschnitt B des in Fig. 2 dargestellten Planenaufbaus in einer seitlichen Ansicht;

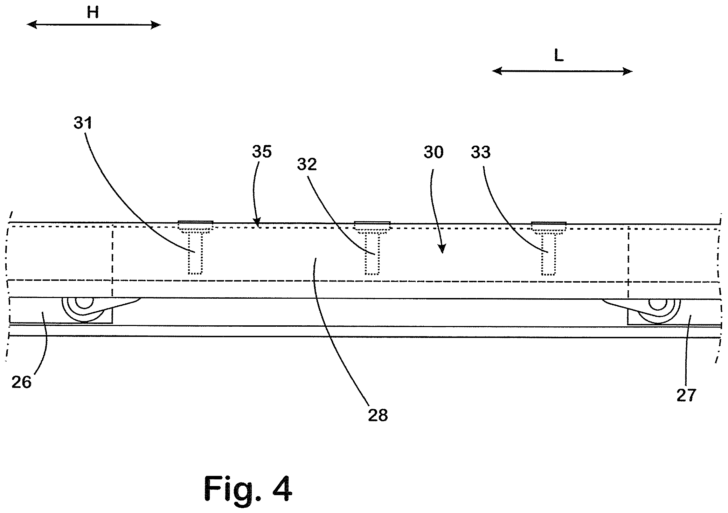

- Fig. 4: einen Ausschnitt A des in Fig. 1 dargestellten Planenaufbaus in einer seitlichen Ansicht.

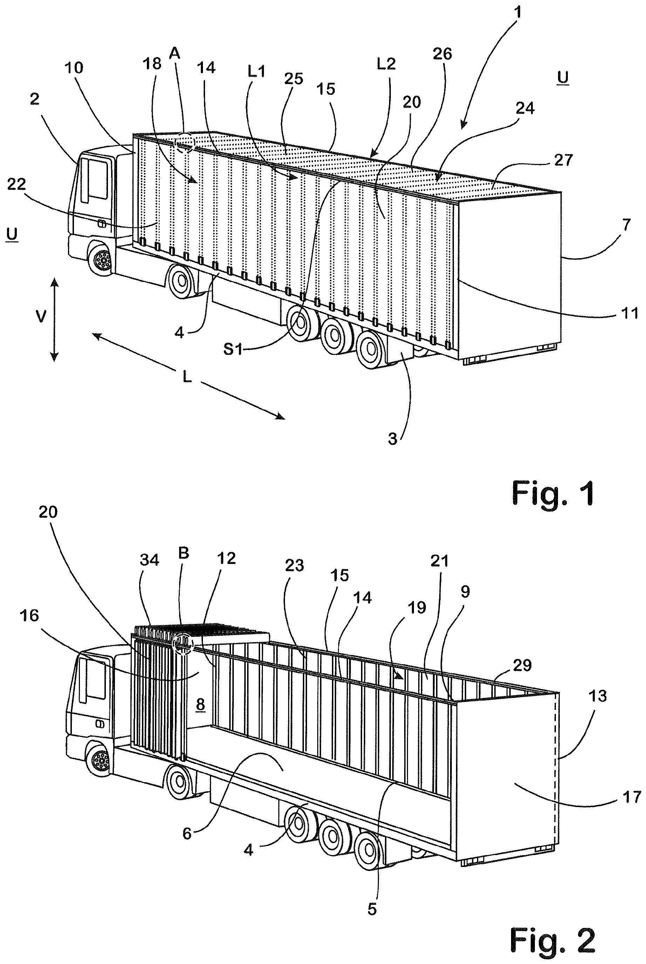

Bei dem in den Figuren 1 und 2 dargestellten Nutzfahrzeug 1 handelt es sich um einen konventionellen Sattelzug, der aus einer Zugmaschine 2 und einem Sattelauflieger 3 gebildet ist. Der Sattelauflieger 3 umfasst ein Chassis, das an seinen Längsseiten L1,L2 jeweils außen liegend ein Führungsprofil 4,5 trägt. Die Führungsprofile 4,5 begrenzen zwischen sich eine rechteckige langgestreckte Ladefläche 6, auf der das jeweils zu transportierende Gut abgestellt wird.

Über der Ladefläche 6 erhebt sich ein quaderförmiger Planenaufbau 7, der einen Laderaum 8 des Sattelaufliegers 3 umgrenzt. Der Planenaufbau 7 umfasst eine Tragkonstruktion 9, die durch in den vier Ecken der Ladefläche 6 stehende Eckrungen 10,11,12,13, von den Eckrungen 10,11 und 12,13 getragene, in horizontaler Richtung H ausgerichtete Dachprofile 14,15 gebildet ist, von denen jeweils eines den Längsseiten L1,L2 zugeordnet ist. An der Tragkonstruktion 9 sind eine feste Stirnwand 16 und eine feste Rückwand 17 des Planenaufbaus 7 abgestützt.

Die sich längs der Längsseiten L1,L2 erstreckenden Seitenwände 18,19 des Planenaufbaus 7 sind dagegen jeweils durch eine Seitenplane 20,21 gebildet, die aus einer geschlossenen Stellung, in der sie zwischen den der jeweiligen Längsseite L1,L2 zugeordneten Eckrungen 10,11 und 12,13 sowie Führungsprofilen 4,5 und Dachprofilen 14,15 gespannt sind und den Laderraum 8 gegenüber der Umgebung U abgrenzen (Fig. 1), in eine geöffnete Stellung verschiebbar ist, in der der Laderraum 8 von der jeweiligen Längsseite L1,L2 her beladen werden kann (Fig. 2). Die Seitenplanen 20,21 sind dabei durch mit ihnen jeweils verkoppelte Schieberungen 22,23 geführt, die bei geschlossenem Planenaufbau 7 längs der jeweiligen Längsseite L1,L2 in regelmäßigen Abständen verteilt positioniert sind und sich in Höhenrichtung, d. h. in vertikaler Richtung V, des Planenaufbaus 7 erstrecken. Dabei sind die Schieberungen 22,23 mit ihrem unteren Ende am jeweils zugeordneten Führungsprofil 4,5 verschiebbar geführt, während sie mit ihrem oberen Ende jeweils in einem Dachprofil 14,15 laufen.

Das Dach 24 des Planenaufbaus 7 ist in entsprechender Weise durch eine Dachplane 25 gebildet, die aus einer geschlossenen Position (Fig. 1) in einer geöffnete Position (Fig. 2) geschoben werden kann, in der eine Dachöffnung freigegeben ist, über die der Laderaum 8 ebenfalls beladen werden kann.

Die Dachplane 25 ist mit Dachschieblingen 26,27 verkoppelt, die verschiebbar auf den Dachprofilen 14,15 gelagert sind und sich über die Breite des Planenaufbaus 7 erstrecken. Dabei ist die Dachplane 25 seitlich so über die Dachprofile 14,15 hinausgezogen, dass sie bei geschlossenem Planenaufbau 7 mit ihrem Längsrandbereich die Seitenplanen 20,21 an ihrem dem Dach 24 zugeordneten oberen Randbereich überlappt. Die Dachschieblinge 26,27 sind an ihren Enden jeweils in einer in die Dachprofile 14,15 eingeformten Führungsaufnahme 28,29 geführt.

Um ein Durchgreifen durch den Schlitz S1 zu verhindern, der sich bei geschlossenem Planenaufbau 7 zwischen der der Längsseite L1 zugeordneten Seitenplane 20 und der sie überlappenden Dachplane 25 bildet, sind im Bereich 30 des zwischen zwei benachbarten Dachschieblingen 26,27 vorhandenen Abstands und angrenzend an den die jeweilige Seitenplane 20,21 bei geschlossenem Planenaufbau seitlich überlappenden Randbereich der Dachplane 25 jeweils drei Eingriffsbarrieren 31,32,33 angeordnet. Die Eingriffsbarrieren 31-33 sind nach Art von Dornen bzw. Zapfen ausgebildet und in regelmäßigen Abständen zwischen den zugeordneten Dachschieblingen 26,27 so angeordnet, dass sie in Richtung des jeweils zugeordneten Dachprofils 14,15 vorstehen. Bei geschlossener Dachplane 25 greifen sie dementsprechend mit ihren Zapfenvorsprüngen in die Führungsaufnahme 28,29 des jeweiligen Dachprofils 14,15. Die identischen Abstände der Eingriffsbarrieren 31-33 zueinander und zu den zugeordneten Dachschieblingen 26,27 sind dabei soviel kleiner als die durchschnittliche Breite einer menschlichen Hand, dass auch Personen mit sehr schmalen Händen nicht mehr durch die im Bereich des jeweiligen Schlitzes S1 verbleibenden Freiräume greifen können.

Wird die Dachplane 25 zum Öffnen des Dachs 24 in Richtung der Stirnwand 16 verschoben, so bildet sich zwischen benachbarten Dachschieblingen 26,27 jeweils eine nach oben gerichtete Falte 34. Im Zuge der Faltenbildung werden die im die betreffende Falte 34 bildenden Dachplanenbereich 30 jeweils angeordneten Eingriffsbarrieren 31-33 selbsttätig mitgenommen und aus der Führungsaufnahme 28,29 bewegt, so dass sie das Verschieben der Dachschieblinge 26,27 nicht behindern.

Zum Schließen des Dachs 24 wird die Dachplane 25 in Richtung der Rückwand 17 geschoben, bis die Dachplane 25 in Längsrichtung L gespannt an der Rückwand 17 anliegt. Im Zuge dieses Verschiebens werden die Falten 34 glattgezogen, so dass sich die Dachplane 25 an die an der Oberseite der Dachprofile 14,15 vorhandenen seitlich an die Führungsaufnahmen 28,29 angrenzenden Anlagefläche 35 der Dachprofile 14,15 anlegt und die Eingriffsbarrieren 31-33 sich selbsttätig wieder in die Führungsaufnahmen 28,29 senken.

### BEZUGSZEICHEN

- 1: Nutzfahrzeug
- 2: Zugmaschine
- 3: Sattelauflieger
- 4,5: Führungsprofile des Chassis des Sattelaufliegers 3
- 6: Ladefläche des Sattelaufliegers 3
- 7: Planenaufbau
- 8: Laderaum des Sattelaufliegers 3
- 9: Tragkonstruktion
- 10-13: Eckrungen der Tragkonstruktion 9
- 14,15: Dachprofile der Tragkonstruktion 9 ("Bauteil")
- 16: Stirnwand des Planenaufbaus 7
- 17: Rückwand des Planenaufbaus 7
- 18,19: Seitenwände des Planenaufbaus 7
- 20,21: Plane ("Seitenplane")
- 22,23: Schieberungen
- 24: Dach des Planenaufbaus 7
- 25: Dachplane
- 26,27: Dachschieblinge ("Schiebeglieder")
- 28,29: Führungsaufnahme der Dachprofile 14,15
- 30: Bereich des Abstands zwischen zwei Dachschieblingen 26,27
- 31-33: Eingriffsbarrieren
- 34: Falten der Dachplane 25
- 35: Anlagefläche

- H: horizontale Richtung
- L: Längsrichtung
- L1,L2: Längsseiten des Sattelaufliegers 3
- S1: Schlitz
- U: Umgebung
- V: vertikale Richtung

## Patentansprüche

1. Planenaufbau für ein Nutzfahrzeug (1), der einen Innenraum (8) gegenüber der Umgebung (U) abgrenzt, wobei an dem Planenaufbau (7) mindestens ein Schlitz (S1) vorhanden ist, der von der Umgebung (U) zum Innenraum (8) führt und von zwei aneinander liegenden Bauteilen (20,21,25;14,15) begrenzt ist, von denen das eine Bauteil eine Plane (20,21,25) ist, **dadurch gekennzeichnet, dass** im Bereich des Schlitzes (S1) mindestens eine Eingriffsbarriere (31-33) vorgesehen ist, die ein Durchgreifen durch den Schlitz (S1) zum Innenraum (8) verhindert, **dass** die Eingriffsbarriere (31-33) an einem der beiden Bauteile (20,21,25;14,15) befestigt ist und **dass** die Eingriffsbarriere (31-33) im an dem jeweils anderen Bauteil (14,15) anliegenden Zustand mit diesem Bauteil (14,15) lose dadurch zusammenwirkt, dass die Eingriffsbarriere (31-33) bei gespannter Plane (20,21,25) formschlüssig in eine zugeordnete Aufnahme (28,29) des anderen Bauteils greift.

2. Planenaufbau nach Anspruch 1, **dadurch gekennzeichnet, dass** die Bauteile (20,21,25;14,15) relativ zueinander zwischen einer Stellung, in der der Planenaufbau (7) geöffnet ist, und einer Stellung, in der der Planenaufbau (7) geschlossen ist, bewegbar sind.

3. Planenaufbau nach einem der voranstehenden Ansprüche, **dadurch gekennzeichnet, dass** die Plane (20,21,25) aus einem flexiblen Material besteht und eine elastische Rückstellkraft auf die Eingriffsbarriere (31-33) ausübt.

4. Planenaufbau nach einem der voranstehenden Ansprüche, **dadurch gekennzeichnet, dass** die Eingriffsbarriere (31-33) normal zu der Hauptebene ausgerichtet ist, in der sich die Plane (20,21,25) bei geschlossenem Planenaufbau (7) im gespannten Zustand erstreckt.

5. Planenaufbau nach einem der Ansprüche 2 bis 4, **dadurch gekennzeichnet, dass** das eine Bauteil (14,15) ein Profilelement ist und in dieses eine Bauteil (14,15) eine sich in Längsrichtung (L) des betreffenden Bauteils (14,15) erstreckende nutförmige Führungsaufnahme (28,29) eingeformt ist, in der mindestens ein mit dem anderen Bauteil (20,21,25) verbundenes Schiebeglied (26,27) gelagert ist, mittels dessen das andere Bauteil (20,21,25) entlang des ersten Bauteils (14,15) verschiebbar geführt ist.

6. Planenaufbau nach Anspruch 5, **dadurch gekennzeichnet, dass** zwei oder mehr Schiebeglieder (26,27) in der Führungsaufnahme geführt sind, **dass** die Schiebeglieder mit Abstand zueinander angeordnet sind und **dass** im Bereich des Abstands zwischen den Schiebegliedern jeweils mindestens eine Eingriffsbarriere (31-33) angeordnet ist.

7. Planenaufbau nach einem der voranstehenden Ansprüche , **dadurch gekennzeichnet, dass** die Eingriffsbarriere (31-33) an der Plane (20,21,25) befestigt ist.

8. Planenaufbau nach einem der Ansprüche 5 oder 6, **dadurch gekennzeichnet, dass** die Aufnahme, in die die Eingriffsbarriere (31-33) greift, die dem mindestens einen Schiebeglied zugeordnete Führungsaufnahme (28,29) ist.

9. Planenaufbau nach einem der voranstehenden Ansprüche, **dadurch gekennzeichnet, dass** die Eingriffsbarriere (31-33) dornförmig ausgebildet ist.

10. Planenaufbau nach einem der voranstehenden Ansprüche, **dadurch gekennzeichnet, dass** eine Vielzahl von Eingriffsbarrieren (31-33) vorgesehen ist, die in Längsrichtung (L) des Bauteils (14,15) verteilt mit Abstand zueinander angeordnet sind.

11. Planenaufbau nach einem der voranstehenden Ansprüche, **dadurch gekennzeichnet, dass** an dem Bauteil (14,15) Seilführungselemente angebracht sind, die bei gespannter Plane (20,21,25) durch ihnen zugeordnete, in die Plane (20,21,25) eingebrachte Öffnungen greifen, und **dass** bei gespannter Plane (20,21,25) durch die Seilführungselemente ein Spannseil geführt ist, das im gespannten Zustand gegen die der Umgebung zugewandte Außenseite der Plane (20,21,25) wirkt.

12. Nutzfahrzeug mit einem gemäß einem der Ansprüche 1 bis 11 ausgebildeten Planenaufbau (7).

## Claims

1. Canvas cover for a commercial vehicle (1) which defines an interior space (8) with respect to the surroundings (U), wherein at least one slit (S1) is present on the canvas cover (7), which leads from the surroundings (U) to the interior space (8) and is delimited by two components (20, 21, 25; 14, 15) which are adjacent to one another, the one component of which is a canvas sheet (20, 21, 25), **characterised in that** at least one tamper barrier (31 - 33) is provided in the area of the slit (S1), this at least one tamper barrier (31 - 33) preventing someone reaching through the slit (S1) into the interior space (8), **in that** the tamper barrier (31 - 33) is attached to one of the two components (20, 21, 25; 14, 15), and **in that** the tamper barrier (31 - 33), in the state in which it is adjacent to the respective other component (14, 15), loosely interacts with this component (14, 15) by the tamper barrier (31 - 33) engaging with an assigned holding fixture (28, 29) of the other component in a form-fit manner when the canvas sheet (20, 21, 25) is tensioned.

2. Canvas cover according to Claim 1, **characterised in that** the components (20, 21, 25; 14, 15) can be moved relative to one another between a position in which the canvas cover (7) is open and a position in which the canvas cover (7) is closed.

3. Canvas cover according to any one of the preceding claims, **characterised in that** the canvas sheet (20, 21, 25) consists of a flexible material and exerts an elastic restoring force on the tamper barrier (31 - 33) .

4. Canvas cover according to any one of the preceding claims, **characterised in that** the tamper barrier (31 - 33) is aligned normally to the main plane, in which the canvas sheet (20, 21, 25) extends in the tensioned state when the canvas cover (7) is closed.

5. Canvas cover according to any one of Claims 2 to 4, **characterised in that** the one component (14, 15) is a profile element and into this one component (14, 15) a groove-shaped guide holding fixture (28, 29) is formed which extends in the longitudinal direction (L) of the component (14, 15) concerned, in which at least one slide element (26, 27) connected to the other component (20, 21, 25) is mounted, by means of which the other component (20, 21, 25) is moveably guided along the first component (14, 15).

6. Canvas cover according to Claim 5, **characterised in that** two or more slide elements (26, 27) are guided in the guide holding fixture, **in that** the slide elements are arranged spaced apart from one another, and **in that** at least one tamper barrier (31 - 33) is arranged in the space between the slide elements in each case.

7. Canvas cover according to any one of the preceding claims, **characterised in that** the tamper barrier (31 - 33) is attached to the canvas sheet (20, 21, 25).

8. Canvas cover according to either of Claims 5 or 6, **characterised in that** the holding fixture, which the tamper barrier (31 - 33) engages with, is the guide holding fixture (28, 29) assigned to the at least one slide element.

9. Canvas cover according to any one of the preceding claims, **characterised in that** the tamper barrier (31 - 33) is mandrel-shaped.

10. Canvas cover according to any one of the preceding claims, **characterised in that** a plurality of tamper barriers (31 - 33) are provided which are arranged spaced apart from one another in the longitudinal direction (L) of the component (14, 15).

11. Canvas cover according to any one of the preceding claims, **characterised in that** rope guide elements are attached to the component (14, 15) which when the canvas sheet (20, 21, 25) is tensioned grip through openings assigned to them which are inserted in the canvas sheet (20, 21, 25), and **in that** when the canvas sheet (20, 21, 25) is tensioned a tensioning rope is guided through the rope guide elements which in the tensioned state acts against the outside of the canvas sheet (20, 21, 25) facing the surroundings.

12. Commercial vehicle having a canvas cover (7) formed according to any one of Claims 1 to 11.

## Revendications

1. Structure de bâche destinée à un véhicule utilitaire (1), ladite structure de bâche délimitant un espace intérieur (8) par rapport à l'environnement (U), où au moins une fente (S1) est présente sur la structure de bâche (7), ladite fente conduisant de l'environnement (U) jusqu'à l'espace intérieur (8) et étant délimitée par deux composants (20, 21, 25 ; 14,15) adjacents, dont ledit un composant est une bâche (20, 21, 25), **caractérisée en ce qu'**au moins une barrière d'accès (31-33) est présente dans la zone de la fente (S1, ladite barrière d'accès empêchant une saisie à travers la fente (S1) vers l'espace intérieur (8), **en ce que** la barrière d'accès (31-33) est fixée à l'un des deux composants (20, 21, 25 ; 14, 15) et **en ce que** la barrière d'accès (31-33) interagit avec ce composant (14,15) de manière lâche dans l'état adjacent à l'autre composant (14,15) respectif, de telle sorte que la barrière d'accès (31-33) s'engage par complémentarité de forme, lors d'une bâche tendue (20, 21, 25), dans un logement associé (28, 29) de l'autre composant.

2. Structure de bâche selon la revendication 1, **caractérisée en ce que** les composants (20, 21, 25 ; 14, 15) sont déplaçables l'un par rapport à l'autre entre une position dans laquelle la structure de bâche (7) est ouverte, et une position dans laquelle la structure de bâche (7) est fermée.

3. Structure de bâche selon l'une des revendications précédentes, **caractérisée en ce que** la bâche (20, 21, 25) se compose d'un matériau souple et exerce une force de rappel élastique sur la barrière d'accès (31-33).

4. Structure de bâche selon l'une des revendications précédentes, **caractérisée en ce que** la barrière d'accès (31-33) est orientée dans une direction normale au plan principal, dans lequel s'étend la bâche (20, 21, 25) dans un état tendu, lors d'une structure de bâche fermée (7).

5. Structure de bâche selon l'une des revendications 2 à 4, **caractérisée en ce que** ledit un composant (14, 15) est un élément profilé et dans ledit un composant (14, 15) est formé un logement de guidage (28, 29) en forme de rainure s'étendant dans la direction longitudinale (L) du composant concerné (14, 15), dans lequel logement de guidage est logé au moins un élément coulissant (26, 27) relié à l'autre composant (20, 21, 25), à l'aide duquel élément coulissant l'autre composant (20, 21, 25) peut être guidé de façon coulissante le long du premier composant (14, 15).

6. Structure de bâche selon la revendication 5, **caractérisée en ce que** deux ou plus éléments coulissants (26, 27) sont guidés dans le logement de guidage, **en ce que** les éléments coulissants sont agencés espacés les uns par rapport aux autres et **en ce que**, dans la zone de l'espacement entre les éléments coulissants, est respectivement agencée au moins une barrière d'accès (31-33).

7. Structure de bâche selon l'une des revendications précédentes, **caractérisée en ce que** la barrière d'accès (31-33) est fixée à la bâche (20, 21, 25).

8. Structure de bâche selon l'une des revendications 5 ou 6, **caractérisée en ce que** le logement dans lequel s'engage la barrière d'accès (31-33) est le logement de guidage (28, 29) associé au au moins un élément coulissant.

9. Structure de bâche selon l'une des revendications précédentes, **caractérisée en ce que** la barrière d'accès (31-33) est conçue en forme de tige.

10. Structure de bâche selon l'une des revendications précédentes, **caractérisée en ce que** l'on prévoit une multitude de barrières d'accès (31-33) agencées réparties distantes les unes des autres en direction longitudinale (L) du composant (14, 15).

11. Structure de bâche selon l'une des revendications précédentes, **caractérisée en ce que** des éléments de guidage de câble sont apposés au composant (14,15), lesquels éléments de guidage, lors d'une bâche tendue (20, 21, 25), s'engagent à travers des ouvertures leur étant associées, appliquées dans la bâche (20, 21, 25), et **en ce que**, lors d'une bâche tendue (20, 21, 25), un câble de tension est guidé par les éléments de guidage de câble, lequel câble de tension agit, dans un état tendu, contre le côté extérieur de la bâche (20, 21, 25) tourné vers l'environnement.

12. Véhicule utilitaire avec une structure de bâche (7) selon l'une des revendications 1 à 11.
